# EUROPEAN PATENT APPLICATION

(11) **EP 1 849 987 A2**
(43) Date of publication of application: **31.10.2007**
(21) Application number: 07251284.1
(22) Date of filing: 27.03.2007
(51) Int. Cl.: F02K 1/82, F02K 3/06

(54) **Gas turbine engine with acoustic liners**

(30) Priority: 26.04.2006 GB 0608236
(71) Applicant: Rolls-Royce plc, London SW1E 6AT (GB)
(72) Inventor: Tester, Brian John, Christchurch, Dorset BH23 4EX (GB)
(74) Representative: Gunn, Michael Alan

(57) **Abstract**

A gas turbine engine (10) comprising an afterbody (29', 30'), which extends rearwardly from a nozzle exit plane (27, 35), having an outer surface (37, 39) comprising acoustic liners (36, 38).

## Description

The present invention relates to acoustic attenuation treatment to a gas turbine engine.

It is known to place acoustic attenuating liners within gas flow ducts of gas turbine engines to reduce engine noise. Such ducts include an intake and a bypass duct. As engine noise, generated particularly by a fan assembly, passes down a duct, in the form a series of pressure waves, the noise is partially attenuated by the acoustic liner and partially transmitted through multiple reflections from the liner surfaces. Thus despite the conventional acoustic treatment a significant portion of engine noise is still perceived on the ground.

Therefore it is an object of the present invention to provide improved acoustic attenuation such that less engine noise is perceived.

In accordance with the present invention a gas turbine engine comprises an afterbody, the afterbody has an outer surface comprising acoustic liners.

Preferably, the acoustic liners extend up to 360 degrees around the circumference of the afterbody.

Alternatively, the acoustic liners extend only around a lower part of the circumference of the afterbody.

Preferably, the acoustic liners extend 180 degrees around the lower part of the circumference of the afterbody. Alternatively, the acoustic liners extend up to 270 degrees around a lower part of the circumference of the afterbody or possibly, only extend up to 90 degrees.

Preferably, the extent of the acoustic liner is symmetrical about an engine centre-line.

Preferably, the engine comprises a bypass nozzle that defines a bypass nozzle exit plane and a core nozzle that defines a core nozzle exit plane.

Preferably, the engine comprises a core cowl radially inward of the bypass nozzle, the afterbody is a portion of the core cowl that extends rearwardly from the bypass nozzle exit plane.

Preferably, the engine comprises a centre-plug radially inward of the core nozzle, the afterbody is a rearward portion of the centre-plug that extends rearwardly from the core nozzle exit plane.

The present invention will be more fully described by way of example with reference to the accompanying drawings in which:
Figure 1 is a schematic section of part of a ducted fan gas turbine engine incorporating the present invention;
Figure 2 is an isometric view on arrow C in Figure 1 showing the position and extent of acoustic panels in accordance with the present invention;
Figure 3 is a view on arrow D in Figure 1 showing the extent of acoustic panels in accordance with the present invention.

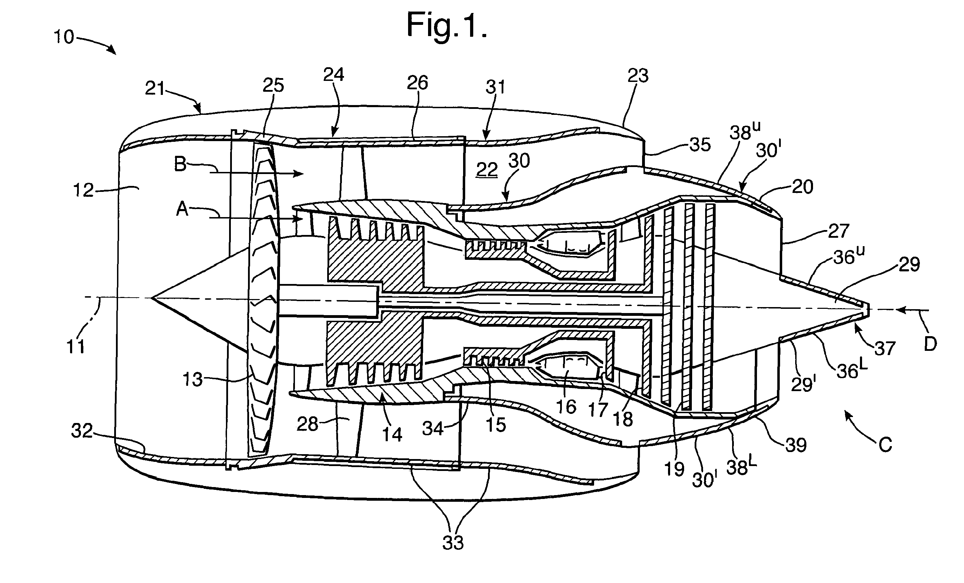

Referring to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and a core exhaust nozzle 20. A nacelle 21 generally surrounds the engine 10 and defines the intake 12, a bypass duct 22 and an exhaust nozzle 23. A centre-plug 29 is positioned within the core exhaust nozzle 20 to provide a form for the core gas flow A to expand against and to smooth its flow from the core engine. The centre-plug 29 extends rearward of the core nozzle's exit plane 27.

The gas turbine engine 10 works in the conventional manner so that air entering the intake 11 is accelerated by the fan 13 to produce two air flows: a first airflow A into the intermediate pressure compressor 14 and a second airflow B which passes through a bypass duct 22 to provide propulsive thrust. The intermediate pressure compressor 14 compresses the airflow A directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

The fan 13 is circumferentially surrounded by a structural member in the form of a fan casing 24, which is supported by an annular array of outlet guide vanes 28. The fan casing 24 comprises a rigid containment casing 25 and attached rearwardly thereto is a rear fan casing 26.

The fan 13 (and turbine 19) generates substantial noise in the form of spiralling pressure waves derived from each passing fan blade in the fan's array of radially extending blades. Conventionally, acoustic liners 32, 33, 34 are provided only within the bypass duct 22 on its inner and outer walls 30, 31. A typical acoustic liner is described on pages 203-205 of 'The Jet Engine' 5th Edition, 1996 ISBN 0 902121 2 35. Conventional belief is that acoustic treatment outside a nozzle's exit plane 27, 35 is not effective as the multiple reflection process cannot occur as it does within an enclosed duct.

Throughout this specification the term 'afterbody' refers to both a portion 29' of the centre-plug 29 that extends rearwardly from the core nozzle exit plane 27 and a portion 30' of the core cowl 30 that extends rearwardly from the bypass nozzle exit plane 35.

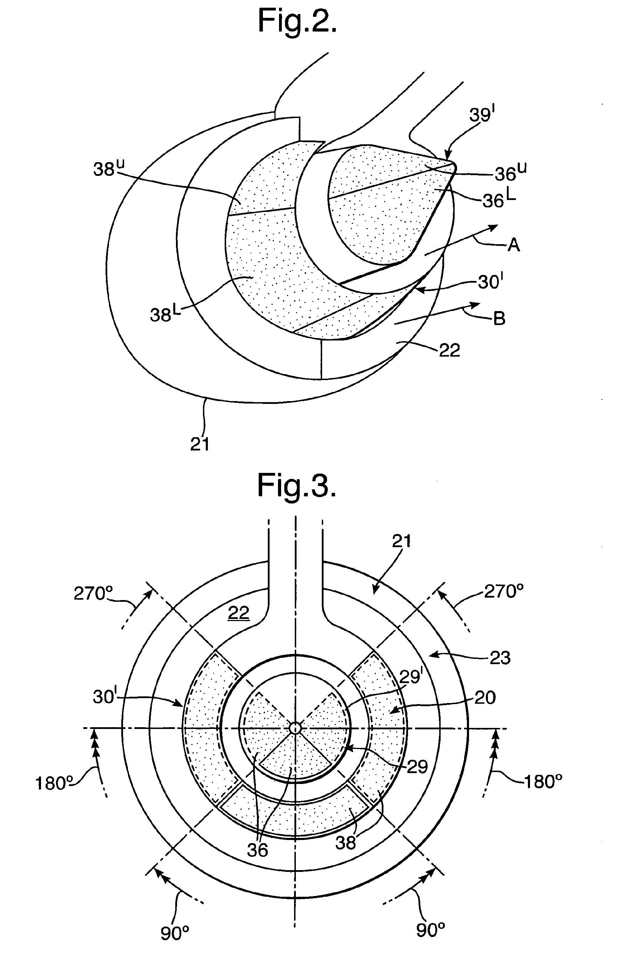

In recent experimental work, the Applicant has found that lining the afterbodies 29', 30' with acoustic panels 36, 38, in accordance with the present invention, provides a surprising and unexpected larger reduction in noise contrary to existing knowledge. In a first embodiment of the present invention, shown in Figures 2 and 3, the complete outer surfaces (i.e. 360 degrees or at least up to the pylon) of the afterbodies 29' 30' are lined with acoustic panels 36, 38. Not only do the lower panels 36^{L} 38^{L} reduce reflection of noise downwardly, but also the upper panels 36^{U}, 38^{U} help to prevent noise diffracting around the afterbodies 29', 30' and downwardly to the ground. Thus it is possible that the acoustic liners in the upper part may be designed differently to those in the lower part of the afterbodies 29', 30'.

The afterbody acoustic liners 36, 38 attenuate noise differently from interior duct acoustic liners 32, 33, 34. The noise waves that strike the acoustic liners 36, 38 are partially absorbed and partially reflected, however, the reflected sound is phase shifted by the liner. The reflected noise waves have smaller amplitudes (compared to an unlined afterbody) but the phase shift causes a partial cancellation with the direct noise waves and hence a noise reduction is achieved for an observer on the ground. Experimental evidence has shown that the noise reduction due to an afterbody liner is significant and additional to that achieved with the conventional, interior duct acoustic liners 32, 33, 34. The acoustic liner itself is similar to those currently used on interior engine duct surfaces, but may be specifically design to attenuate particular noise frequencies.

Current acoustic linings 32, 33, 34 are applied to the interior duct surfaces over the whole 360 degrees of the inner surface, because the multiple reflection process would be less effective if this were not so. However because the acoustic lining of the afterbodies 29', 30' does not rely on multiple reflections, noise reduction can be achieved by applying acoustic lining 36^{L}, 38^{L} only to the lower part of the surface, i.e. the surface acoustically `visible' to the observer on the ground. Only lining the lower part of the afterbodies 29', 30' will be cheaper, lighter and less susceptible to build up of moisture and other forms of contamination.

Referring to Figures 2 and 3, an alternative to lining the complete annulus of the afterbodies 29', 30' is to line only the lower parts 36^{L}, 38^{L}. Preferably, a 180 degree arc around the lower part of the afterbodies 29', 30' is acoustically lined (as indicated on Figure 3). An arc of acoustic lining up to 270 degrees is also beneficial as the pylon would otherwise interfere with fitting and complexity of the acoustic panels, particularly acoustic panels 38^{U}, and their operation. It should also be appreciated that relatively small arcs of up to 90 degrees around the lower parts of the afterbodies 29', 30' are useful as these regions are where engine noise is reflected more directly downwards to an observer on the ground.

In each of the acoustic liner arcs it is preferred that the extent of the acoustic liner 36, 38 is symmetrical about the engine centre-line 11. However, there may be certain circumstances that unsymmetrical arcs of linings are useful. For example, where there is a differential noise field around the circumference of the nozzles or where the engine is fuselage mounted and the pylon connects to the engine between the 3 O'clock and 5 O'clock positions.

It should be appreciated that the present invention is equally applicable to two shaft gas turbine engines as those having three shafts as described herein.

## Claims

1. A gas turbine engine (10) comprising an afterbody (29', 30'), the afterbody (29', 30') has an outer surface (37, 39) comprising acoustic liners (36, 38).

2. A gas turbine engine (10) as claimed in claim 1 wherein the acoustic liners (36, 38) extend up to 360 degrees around the circumference of the afterbody (29', 30').

3. A gas turbine engine (10) as claimed in claim 1 wherein the acoustic liners (36^{L}, 38^{L}) extend only around a lower part of the circumference of the afterbody (29', 30').

4. A gas turbine engine (10) as claimed in claim 3 wherein the acoustic liners (36, 38) extend up to 270 degrees around the lower part of the circumference of the afterbody (29', 30').

5. A gas turbine engine (10) as claimed in claim 3 wherein the acoustic liners (36, 38) extend 180 degrees around the lower part of the circumference of the afterbody (29', 30').

6. A gas turbine engine (10) as claimed in claim 3 wherein the acoustic liners (36, 38) extend up to 90 degrees around the lower part of the circumference of the afterbody (29', 30').

7. A gas turbine engine (10) as claimed in any one of claim 3-6 wherein the extent of the acoustic liner (36, 38) is symmetrical about an engine centre-line (11).

8. A gas turbine engine (10) as claimed in any one of claims 1-7 wherein the engine (10) comprises a bypass nozzle (23) that defines a bypass nozzle exit plane (35) and a core nozzle (20) that defines a core nozzle exit plane (27).

9. A gas turbine engine (10) as claimed in claim 8 wherein the engine comprises a core cowl (30) radially inward of the bypass nozzle (23), the afterbody (30') is a portion (30') of the core cowl (30) that extends rearwardly from the bypass nozzle exit plane (35).

10. A gas turbine engine (10) as claimed in any one of claims 8-9 wherein the engine (10) comprises a centre-plug (29) radially inward of the core nozzle (20), the afterbody (29') is a rearward portion (29') of the centre-plug (29) that extends rearwardly from the core nozzle exit plane (27).
